# EUROPÄISCHE PATENTSCHRIFT

(11) **EP 0 795 692 B1**
(45) Veröffentlichungstag und Bekanntmachung des Hinweises auf die Patenterteilung: **30.06.1999**
(21) Anmeldenummer: 97104013.4
(22) Anmeldetag: 11.03.1997
(51) Int. Cl.: F16C 29/06

(54) **Linearführungssystem**
Linear Guide System
Système de guide linéaire

(30) Priorität: 16.03.1996 DE 19610486
(43) Veröffentlichungstag der Anmeldung: 17.09.1997
(73) Patentinhaber: Kahl, Helmut, D-32457 Porta Westfalica (DE)
(72) Erfinder: Kahl, Helmut, D-32457 Porta Westfalica (DE)
(74) Vertreter: Hanewinkel, Lorenz, Dipl.-Phys.

(56) Entgegenhaltungen:
- DE-A- 2 656 822
- DE-A- 3 705 704
- US-A- 4 941 197
- US-A- 5 217 308

## Beschreibung

Die Erfindung betrifft ein Linearführungssystem aus einer Führungsschiene und einem in Laufrichtung verschiebbar auf der Führungsschiene gelagerten Laufwagen mit Rollkörpern, die die Laufflächen des Laufwagens zu den Auflageflächen der Führungsschiene beabstanden.

Im Werkzeugmaschinenbau (siehe hierzu Seite 749 ff. in DUBBEL, 13. Auflage, 1974) sind Linearführungssysteme mit Rollen- oder Kugelführung bekannt, die in Großmaschinen und Präzisionsmaschinen eingebaut werden. U.a. werden die Laufwagen auf Flachkäfigen mit Kugeln, Rollen oder Nadeln gelagert. Die Rollkörper laufen auf gehärteten und geschliffenen, flachen oder V-förmigen Führungsbahnen.

Des weiteren werden in Führungen umlaufende Rollkörper eingesetzt. Das Spiel zwischen Auflage- bzw. Laufflächen von Laufwagen und Führungsbahnen sollte möglichst eng sein, um die Auflagefläche des Laufwagens auf der Führungsbahn zu erhöhen und damit die Flächenpressung herabzusetzen, die wiederum den Verschleiß bestimmt.

Um ein spielfreies Verschieben des Laufwagens zu gewährleisten, muß das Spiel bei den bekannten Ausführungsformen durch Nachstellen von Stellschrauben minimiert werden. Derzeit werden Führungsschienen und Laufwagen verwendet, deren Profil durch Schleifen oder Feinfräsen hergestellt wird. Nachteilig wirkt sich der hohe Fertigungsaufwand zur Erzielung der erforderlichen Oberflächengüte der Profile auf die Herstellungskosten aus, da viele Arbeitsschritte nötig sind.

Aufgabe der Erfindung ist es, ein Linearführungssystem aus einer Führungsschiene und einem in Laufrichtung verschiebbar auf der Führungsschiene gelagerten Laufwagen, insbesondere mit Rollen- oder Kugelführungen zu schaffen, das aus einfach und damit kostengünstig hergestellten Einzelteilen, wie Führungsschiene und Laufwagen, gebildet ist und ein enges Spiel zwischen den Auflage- und Laufflächen der Einzelteile aufweist, welches durch ein einfaches Meßverfahren bestimmt wird und eine optimale Auswahl der Kugelkörper ermöglicht.

Die Aufgabe wird erfindungsgemäß durch die kennzeichnenden Merkmale des Schutzanspruches 1 gelöst, wobei die in den Unteransprüchen ausgeführten Gestaltungsmerkmale weitere vorteilhafte Ausführungsformen der Aufgabenlösung darstellen.

Das erfindungsgemäße Linearführungssystem besteht aus einer Führungsschiene und einem auf Rollkörpern gelagerten Laufwagen mit stranggepreßten Profilen, insbesondere Aluminium-Profilen, wobei das herstellungsbedingte Spiel zwischen den Laufflächen und Auflageflächen durch in Führungen des Laufwagens umlaufende Rollkörper, vorzugsweise Kugeln, mit einem an das Spiel angepaßten Durchmesser ausgeglichen wird.

Der Laufwagen weist an seiner der Führungsschiene zugewandten Unterseite beidseitig einer sich in Laufrichtung erstreckenden Führungsnut spiegelsymmetrisch zueinander angeordnete Umlaufführungen auf. Eine Umlaufführung besteht aus zwei parallel zueinander verlaufenden Führungskanälen und bogenförmigen, die Führungskanäle geschlossen verbindenden Umlenkungen. Der eine Führungskanal ist eine die Lauffläche bildende Rollführung mit einem hinterschnittenen vorzugsweise kreisförmigen Querschnitt. Die Öffnungsweite der den Austritt der Kugeln bildenen Öffung der Rollführung ist kleiner als der halbe Umfang des Querschnittes der Rollführung. Eine möglichst kleine Öffnungweite insbesondere kleiner als ein viertel Umfang des Querschnittes hat sich als vorteilhaft erwiesen, da die Führung der Kugeln in der Rollführung besonders stabil ist. Der andere Führungskanal ist eine im Profilkern angeordnete Rückführung mit geschlossenem Umfang zum Rücklauf der Kugeln. Die Umlaufführung wird durch an den Stirnseiten des Laufwagens angebrachte Abschlußkappen mit bogenförmigen Umlenkungsführungen zur Verbindung der Rollführung mit der Rückführung geschlossen.

Im Gegensatz zu den herkömmlich hergestellten Führungsschienen und Laufwagen weisen die Strangpreßteile bereits nach der Herstellung das endgültige Profil auf, da beim Strangpressen die Führungen und die Nuten direkt eingearbeitet werden. Weitere Bearbeitungsschritte, wie Schleifen der Führungsbahnen und Bohren der Umlaufführungen, entfallen. Um den Verschleiß der Auflage- und Laufflächen der Strangpreßteile zu senken, sind diese Oberflächen gehärtet. Hierzu werden gehärtete Einsatz- oder Aussatzleisten, insbesondere aus gehärtem Stahl, verwendet.

Das Material der umlaufenden Kugeln ist entsprechend der Härte der Lauf- und Auflageflächen der Profile ausgewählt, um den Verschleiß gering zu halten. Bei eloxierten Profiloberflächen werden Kunststoffkugeln eingesetzt, und bei hartcoatierten oder plasmagehärteten Profiloberflächen sind die umlaufenden Kugeln aus Metall.

Um ein Verkanten des Laufwagens und eine zusätzliche Abnutzung der Auflageflächen zu verhindern, wird bei auf der Führungsschiene aufgesetztem Laufwagen das optimale Spiel zwischen der Lauffläche des Laufwagens und der Auflagefläche der Führungsschiene durch Einführen von Meßstiften anstelle von Kugeln in die Rollführungen des Laufwagens ermittelt. Entsprechend dem Durchmesser der Meßstifte werden dann paßgenaue Kugeln in die Umlaufführung eingesetzt. Die Meßstifte sind in ihren Durchmessern um je 0,005 bis 0,03 mm, vorzugsweise 0,01 mm abgestuft. Der optimale Kugeldurchmesser wird für jede der Rollführungen neu bestimmt.

Das herstellungsbedingte Spiel wird durch die umlaufenden Kugeln mit dem mittels oben beschriebenen Meßverfahren bestimmten Durchmesser ausgeglichen.

Die Erfindung wird anhand eines in den Zeichnungen dargestellten bevorzugten Ausführungsbeispieles erläutert. Es zeigt:
- Fig. 1: eine Perspektive eines Linearführungssystems mit einem auf einer Führungsschiene verschiebbar gelagerten Laufwagen mit umlaufender Kugelführung,
- Fig. 2: eine Perspektive des Laufwagens nach Fig. 1 in Explositionsdarstellung.

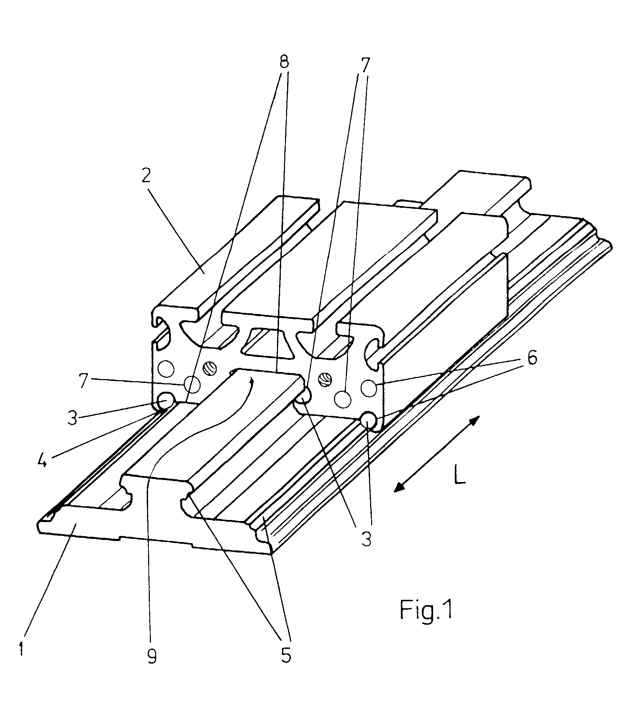

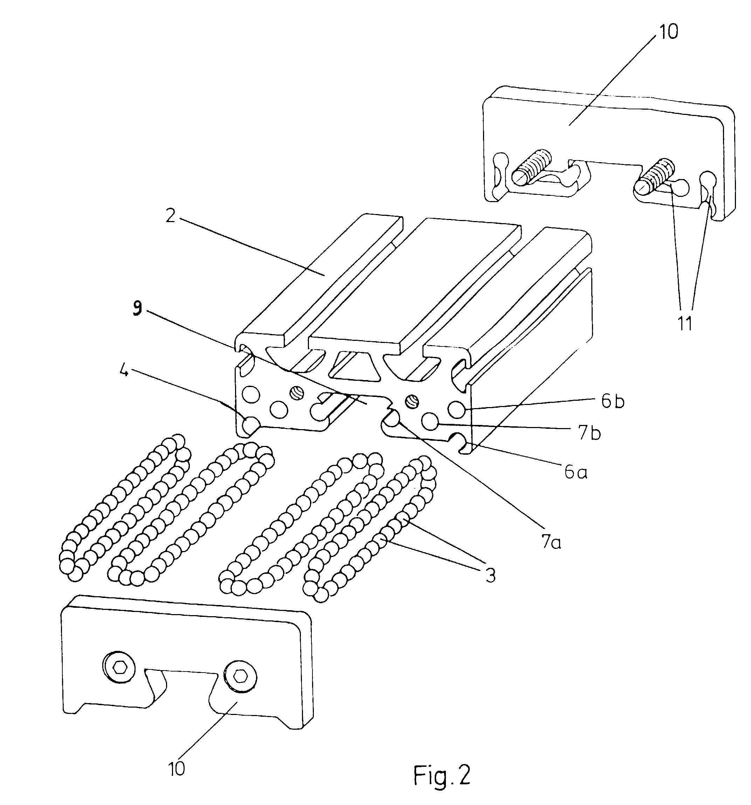

Das in den Figuren 1 und 2 dargestellte Linearführungssystem besteht aus einer Führungsschiene (1) mit T-förmigem Querschnitt und einem auf umlaufenden Kugeln (3) verschiebbar gelagerten Laufwagen (2).

Fig. 1 zeigt ein inneres Führungssystem des Laufwagens (2). Der T-Steg der Führungsschiene (1) greift in eine Führungsnut (9) an der der Führungsschiene (1) zugewandten Unterseite (8) des Laufwagens (2) ein. Beidseitig der sich in Laufrichtung (L) erstreckenden Führungsnut (9) sind spiegelsymmetrisch zueinander vier Umlaufführungen (6, 7), an der die Lauffläche (4) bildenden Unterseite (8) des Laufwagens (2) angeordnet.

Die in den Umlaufführungen (6, 7) gehaltenen Kugeln (3) gleichen das herstellungsbedingte Spiel (S) der Strangpreßprofile (1, 2) zwischen der Lauffläche (4) des Laufwagens (2) und der Auflagefläche (5) der Führungsschiene (1) aus. Der Kugeldurchmesser ist entsprechend des mittels des Meßverfahrens bestimmten paßgenauen Durchmessers der Meßstifte ausgewählt. Die Laufeigenschaften des Laufwagens (2) in Verbindung mit der Führungsschiene (1) sind dann optimiert, da das Spiel zwischen beiden Teilen minimiert ist. Je nach Eigenschaften der Strangpreßteile (1, 2), Oberflächengüte und Härte, werden als Rollkörper (3) Metall- oder Kunststoffkugeln verwendet.

In Fig. 2 sind die wesentlichen Bestandteile (2, 3, 10) des Laufwagens (2) dargestellt. Deutlich erkennbar sind die Umlaufführungen (6, 7) des Laufwagens (2), die aus zwei parallel beabstandeten Führungskanälen und den Umlenkungen (11) bestehen. Die Lauffläche (4) der Kugeln (3) auf der Auflagefläche (5) der Führungsschiene (1) wird durch die unterseitige Rollführung (6a, 7a) gebildet, die einen hinterschnittenen, kreisförmigen Querschnitt aufweist. Die Öffnungsweite der den Austritt der Kugeln (3) bildenden Öffnung der Rollführung (6a,7a) ist kleiner als ihr halber Umfang. In der im Profilkern angeordneten Rückführung (6b, 7b) werden die Kugeln zurückgeführt.

Die geschlossene Umlaufführung (6, 7) wird durch stirnseitig angebrachte Abschlußkappen (10) mit bogenförmigen Umlenkungen (11) zur Verbindung der Rollführung (6a, 7a) mit der Rücklaufführung (6b, 7b) erzielt.

Bei einer nicht dargestellten Ausführungsform eines Linearführungssystems ist der Laufwagen (2) auf außenliegenden Führungen verschiebbar gelagert.

## Patentansprüche

1. Linearführungssystem aus einer Führungsschiene (1) und einem in Laufrichtung (L) verschiebbar auf der Führungsschiene (1) gelagerten Laufwagen (2) mit Rollkörpern (3), die die Laufflächen (4) des Laufwagens (2) zu den Auflageflächen (5) der Führungsschiene (1) beabstanden, dadurch gekennzeichnet, daß die Führungsschiene (1) und der Laufwagen (2) stranggepreßte Profile sind und das herstellungsbedingte Spiel (S) zwischen den Lauf- und Auflageflächen (4, 5) durch in Führungen (6, 7) des Laufwagens (2) umlaufende Rollkörper (3), vorzugsweise Kugeln, mit paßgenauem Durchmesser, ausgeglichen ist.

2. Linearführungssystem nach Anspruch 1, dadurch gekennzeichnet, daß der Laufwagen (2) an seiner der Führungsschiene (1) zugewandten Unterseite (8) beidseitig einer sich in Laufrichtung (L) erstreckenden Führungsnut (9) spiegelsymmetrisch zueinander angeordnete Umlaufführungen (6, 7) mit kreisförmigem Querschnitt aufweist.

3. Linearführungssystem nach Anspruch 1 oder 2, dadurch gekennzeichnet, daß eine Umlaufführung (6, 7) aus einer die Lauffläche (4) des Laufwagens (2) bildenden Rollführung (6a, 7a), einer parallel zur Rollführung (6a, 7a) beabstandeten, im Profilkern des Laufwagens (2) angeordneten Rückführung (6b, 7b) und bogenförmigen, die parallelen Führungskanäle (6a, 6b, 7a, 7b) verbindenden Umlenkführungen (11) gebildet ist.

4. Linearführungssystem nach einem der vorstehenden Ansprüche, dadurch gekennzeichnet, daß stirnseitig an dem Laufwagen (2) Abschlußkappen (10) angebracht sind, in die die bogenförmigen Umlenkführungen (11) zur Verbindung der Rollführung (6a, 7a) mit der Rückführung (6b, 7b) eingearbeitet sind.

5. Linearführungssystem nach einem der vorstehenden Ansprüche, dadurch gekennzeichnet, daß die Rollführung (6a,7a) einen hinterschnittenen, vorzugsweise kreisförmigen Querschnitt mit einer den Austritt der Kugeln (3) bildenden Öffnung hat und die Öffnungsweite kleiner als der halbe, vorzugsweise der viertel, Umfang des Querschnitts der Rollführung (6a,7a) ist.

6. Linearführungssystem nach einem der vorstehenden Ansprüche, dadurch gekennzeichnet, daß die Auflagefläche (5) der Führungsschiene (1) und/oder die Lauffläche (4) des Laufwagens (2) eine gehärtete Oberfläche aufweisen.

7. Linearführungssystem nach einem der vorstehenden Ansprüche, dadurch gekennzeichnet, daß die Auflagefläche (5) der Führungsschiene (1) und/oder die Lauffläche (4) des Laufwagens (2) von einer gehärteten Einsatz- oder Aufsatzleiste gebildet ist.

8. Linearführungssystem nach einem der vorstehenden Ansprüche, dadurch gekennzeichnet, daß das Material der Kugeln (3) an die Härte der Profiloberflächen der Führungsschiene (1) und des Laufwagens (2) angepaßt ist.

9. Linearführungssystem nach einem der Ansprüche 1 bis 8, dadurch gekennzeichnet, daß bei eloxierten Profiloberflächen die umlaufenden Kugeln (3) aus Kunststoff sind.

10. Linearführungssystem nach einem der Ansprüche 1 bis 8, dadurch gekennzeichnet, daß bei hartcoatierten Profiloberflächen die umlaufenden Kugeln (3) aus Metall sind.

11. Verfahren zur Bestimmung des Laufspieles zwischen der Lauffläche (4) des Laufwagens (2) und der Auflagefläche (5) der Führungsschiene (1) in einem Linearführungssystem, dadurch gekennzeichnet, daß bei auf die Führungsschiene (1) aufgesetztem Laufwagen (2) in die Rollführungen (6a, 7a) Meßstifte mit feinfühlig abgestuftem Durchmesser eingesteckt werden und dadurch das optimale (minimale) Laufspiel (S) zwischen Laufwagen (2) und Führungsschiene (1) festgelegt wird und dann entsprechend paßgenaue Rollkörper (3), vorzugsweise Kugeln, in die umlaufende Führung (6, 7) eingebracht werden.

## Claims

1. Linear guide system consisting of a guide rail (1) and a running carriage (2), movably borne in the running direction (L) on the guide rail (1), with rolling bodies (3) which distance the running faces (4) of the running carnage (2) from the bearing surfaces (5) of the guide rail (1),
characterised in that
the guide rail (1) and the running carriage (2) are extruded profiles, and the play due to manufacture (S) between the running and bearing surfaces (4, 5) is compensated by rolling bodies (3), preferably balls, of precisely-fitting diameter which circulate in guide channels (6, 7) of the running carriage (2).

2. Linear guide system in accordance with claim 1, characterised in that the running carriage (2), on its underside (8) facing the guide rail (1), has circulatory guide channels (6, 7) of a circular cross section, which are arranged mirror-symmetrically to one another on both sides of a guide groove (9) extending in the running direction (L).

3. Linear guide system in accordance with claim 1 or 2, characterised in that a circulatory guide channel (6, 7) is formed from a roller guide channel (6a, 7a) which forms the running face (4) of the running carriage (2), a return guide channel (6b, 7b) arranged in the profile core of the running carriage (2), parallel to and at a distance from the roller guide channel (6a, 7a), and bowed deflection guides (11) which connect the parallel guide channels (6a, 6b, 7a, 7b).

4. Linear guide system in accordance with one of the preceding claims, characterised in that closing caps (10) are fitted on the running carriage (2) on the frontal face, and worked into these are the bowed deflection guides (11) for connecting the roller guide channel (6a, 7a) with the return guide channel (6b, 7b).

5. Linear guide system in accordance with one of the preceding claims, characterised in that the roller guide channel (6a, 7a) has an undercut, preferably circular, cross section with an aperture forming the outlet of the balls (3), and that the aperture width is smaller than half the circumference, preferably smaller than a quarter of the circumference, of the cross section of the roller guide channel (6a, 7a).

6. Linear guide system in accordance with one of the preceding claims, characterised in that the bearing surface (5) of the guide rail (1) and/or the running surface (4) of the running carriage (2) have a hardened surface.

7. Linear guide system in accordance with one of the preceding claims, characterised in that the bearing surface (5) of the guide rail (1) and/or the running surface (4) of the running carriage (2) is formed of a hardened insert strip or top strip.

8. Linear guide system in accordance with one of the preceding claims, characterised in that the material of the balls (3) is matched to the hardness of the profile surface of the guide rail (1) and of the running carriage (2).

9. Linear guide system in accordance with one of the claims 1 to 8, characterised in that in the case of anodized profile surfaces, the circulating balls (3) are made of plastic.

10. Linear guide system in accordance with one of the claims 1 to 8, characterised in that in the case of hard-coated profile surfaces, the circulating balls (3) are of metal.

11. Method for determining the running play between the running face (4) of the running carriage and the bearing surface (5) of the guide rail (1) in a linear guide system, characterised in that when the running carriages (2) is placed on the guide rail (1), measuring pins of sensitively graduated diameter are inserted into the roller guide channels (6a, 7a), and thereby the optimum (minimum) running play (S) between running carriage (2) and guide rail (1) is established, and then precisely-fitting rolling bodies (3), preferably balls, are introduced into the circulatory guide (6, 7).

## Revendications

1. Système de guidage linéaire composé d'un rail de guidage (1) et d'un chariot (3), monté sur ce rail de guidage (1) et déplaçable sur celui-ci dans le sens de la marche (L), et d'organes de roulement (3) qui maintiennent les surfaces de roulement (4) du chariot (2) à distance des surfaces de support (5),
caractérisé en ce que
le rail (1) et le chariot (2) sont formés par des profilés extrudés et que le jeu (S) entre les surfaces de roulement et les surfaces de support (4, 5), lequel est lié à la fabrication, est compensé par les organes de roulement (3) qui sont préférentiellement des billes et tournent dans les coulisses de guidage (6, 7) du chariot.

2. Système de guidage linéaire selon la revendication 1,
caractérisé en ce que
le chariot (2) présente, sur sa surface inférieure, dirigée vers le rail de guidage (1) des guides (6, 7) à section transversale circulaire disposés symétriquement par rapport l'un à l'autre, de part et d'autre d'une rainure de guidage (9) qui s'étend dans le sens de la marche (L).

3. Système de guidage linéaire selon la revendication 1 ou 2,
caractérisé en ce que
l'un des guides (6, 7) est composé d'un canal de roulement (6a, 7a) formant la surface de roulement (4) du chariot (2) et d'un canal de retour (6b, 7b), disposés à distance l'un de l'autre et parallèlement l'un à l'autre, dans le corps du chariot (2), ainsi que de renvois (11) arqués qui relient les canaux de guidage (6a, 6b, 7a, 7b) parallèles.

4. Système de guidage linéaire selon l'une des revendications précédentes,
caractérisé en ce que
les parties frontales du chariot (2) sont pourvues de capuchons (10) dans lesquels les renvois (11) arquées sont pratiqués pour assurer la liaison entre les canaux de roulement (6a, 7a) et les canaux de retour (6b, 7b).

5. Système de guidage linéaire selon l'une des revendications précédentes,
caractérisé en ce que
le canal de roulement (6a, 7a) présente une section transversale préférentiellement circulaire, dépouillée, l'ouverture de sortie des billes (3) présentant une gorge dont la taille est inférieure à la moitié, de préférence le quart du pourtour du canal de guidage circulaire(6a, 7a).

6. Système de guidage linéaire selon l'une des revendications précédentes,
caractérisé en ce que
la surface de support (5) du rail de guidage (1) et/ou la surface de roulement (4) du chariot (2) présente/nt une surface durcie.

7. Système de guidage linéaire selon l'une des revendications précédentes,
caractérisé en ce que
la surface de support (5) du rail de guidage (1) et/ou la surface de roulement (4) du chariot (2) est formée par une nervure durcie à insérer ou à porter.

8. Système de guidage linéaire selon l'une des revendications précédentes,
caractérisé en ce que
le matériau utilisé à la fabrication des billes (3) est adapté à la dureté des surfaces des profilés du rail de guidage (1) et du chariot (2).

9. Système de guidage linéaire selon l'une des revendications 1 à 8,
caractérisé en ce que
les billes de roulement (3) sont en matière plastique quand les surfaces des profilés sont anodisés.

10. Système de guidage linéaire selon l'une des revendications 1 à 8,
caractérisé en ce que
les billes de roulement (3) sont en métal quand les surfaces des profilés sont pourvus d'un revêtement dur.

11. Procédé de détermination du jeu entre la surface de roulement (4) du chariot (2) et la surface de support (5) du rail de guidage (1) d'un système de guidage linéaire,
caractérisé en ce que,
le chariot (2) étant en place sur le rail de guidage (1), des tiges de mesurage de diamètre finement degradé sont insérés dans les canaux de guidage (6a, 7a) pour déterminer le jeu optimal (minimum) (S) entre le chariot (2) et rail de guidage (1), ce après quoi des organes de roulement (3) - de préférence des billes - parfaitement ajustés sont introduits dans les guides (6, 7).
